# EUROPÄISCHE PATENTANMELDUNG

(11) **EP 0 745 919 A1**
(43) Veröffentlichungstag der Anmeldung: **04.12.1996**
(21) Anmeldenummer: 95108214.8
(22) Anmeldetag: 30.05.1995
(51) Int. Cl.: G05D 23/24

(54) **Verfahren zur Temperaturregelung eines Heizelementes**

(71) Anmelder: Koch, Volker, D-28329 Bremen (DE)
(72) Erfinder: Bräutigam, Wilfried, D-64756 Mossautal (DE)

(57) **Zusammenfassung**

Es gibt eine Vielzahl elektrisch und elektronisch geregelter Heizelemente, die mittels Temperatursensoren (Thermoelemente, NTC-PTC Sensoren etc.) je nach vorgewählter Temperatureinstellung auf konstanter Temperatur gehalten werden.
Bei dem hier anzumeldenden Patent wird ganz auf Sensor oder Meßwiderstand verzichtet. Das Heizelement wird selbst zum Fühler.
Die Wechselspannung wird mittels Gleichrichtung (1) zu einer pulsierenden Gleichspannung, die in der Spannungsstabilisierung (2) geglättet und stabilisiert wird. Der Taktgeber (3) sorgt für eine zeitliche Aufteilung von Meßphase und Heizphase. In der Meßphase wird das Heizen unterbrochen und der Widerstand des Heizelementes (8) mit der Sollwert-Vorgabe (4) im Vergleicher (5) verglichen. Je nachdem, ob der Widerstand des Heizelementes über oder unter dem des Sollwertes liegt, wird nun die Ansteuerung (6) für den Wechselspannungsschalter (7) mitgeteilt, ob geheizt oder nicht geheizt werden muß, um den Sollwert zu erreichen.

## Beschreibung

Es gibt eine Vielzahl elektrisch und elektronisch geregelter Heizelemente, die mittels Temperatursensoren (Thermoelemente, NTC-PTC Sensoren etc.) je nach vorgewählter Temperatureinstellung auf konstanter Temperatur gehalten werden. Diese Temperaturfühler beinhalten jedoch Nachteile wie z.B. Linearität, Temperaturempfindlichkeit, Ausgleichsleitung usw.
In der Patentschrift DE 3228202 wird bereits ein Verfahren aufgezeigt, welches bereits ohne Sensoren auskommt. Diese Anordnung hat jedoch den Nachteil, daß im Heizstromkreis zusätzlich ein Meßwiderstand erforderlich ist, um den durch das Heizelement fließenden Strom zu messen. Dieser Meßwiderstand ist außerdem eine Fehlerquelle, welche bei diesem Verfahren ausgeschaltet ist..
Bei dem hier angemeldeten Verfahren wird dieser Nachteil vermieden, sodaß diese Anordnung nicht mit dem oben genannten Patent identisch ist.
Bei dem hier anzumeldenden Patent wird ganz auf Sensor oder Meßwiderstand verzichtet. Das Heizelement wird selbst zum Fühler.

Die gesamte Schaltungsanordnung besteht nur aus:
A. Heizelement
B. Wechselspannungsschalter
C. Regelkreis mit
   a. Spannungsstabilisierung
   b. Ablaufsteuerung
   c. Vergleicher
   d. Ansteuerung für den Wechselspannungsschalter

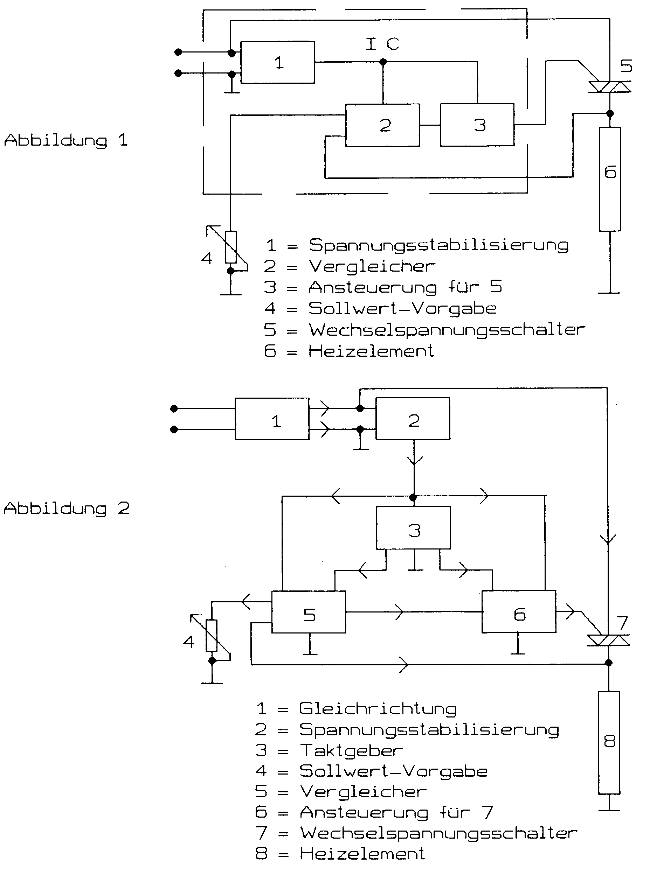

### Beschreibung der Anordnung nach Abbildung 1:

Aus der Wechselspannung wird mittels Spannungsstabilisierung (1) die Gleichspannungsversorgung der Steuerschaltung sichergestellt. Der Widerstand des Heizelementes (6) sowie der Widerstand der Sollwert-Vorgabe (4) werden mit einem Gleichstrom beaufschlagt. Der Vergleicher (2) vergleicht den Spannungsabfall über dem Heizelement (6) mit dem Spannungsabfall über dem Widerstand der Sollwert-Vorgabe (4). Besitzt das Heizelement z.B. PTC-Verhalten (Keramik Heizelement) , so muß geheizt werden, um einen höheren Widerstandswert zu erhalten. Wird dann z.B. der Widerstandswert an der Sollwert-Vorgabe (4) vergrößert, so meldet dies der Vergleicher (2) an die Ansteuerung (3) für den Wechselspannungsschalter (5), worauf dieser einschaltet und das Heizelement (6) an die Wechselspannung legt, worauf dieses heizt.
Die Wechselspannung am Heizelement (6) führt aber sofort zum Kippen des Vergleichers (2), worauf dieser über die Ansteuerung (3) den Schalter (5) öffnet und den Heizvorgang unterbricht.

Wenn nun der Widerstandswert des Heizelementes (6) immer noch unterhalb der Sollwert-Vorgabe (4) liegt, schaltet der Vergleicher (2) über (3) und (5) die Wechselspannung sofort wieder ein.
Dieses schnelle Ein- und Aus-schalten wiederholt sich so lange, bis der Widerstand des Heizelementes (6) die Sollwert-Vorgabe (4) erreicht hat, weil dann der Spannungsabfall am Heizelement (6) sowohl bei Wechselspannung als auch bei abgeschalteter Wechselspannung größer ist als der Spannungsabfall an der Sollwert-Vorgabe (4).
Wenn dann das Heizelement (6) wieder abkühlt und der Spannungsabfall des Gleichstromes mit sinkendem Widerstand zurückgeht wird der Heizvorgang bei Unterschreiten der Sollwert-Vorgabe erneut gestartet, bis der Sollwert wieder erreicht ist.
Durch diesen Regelvorgang wird eine konstante Temperatur am Heizelement erreicht, die um ca. +/-1% schwankt.

Die Komponenten (1), (2) und (3), die auch aus Einzelbauelementen aufgebaut werden können, sind hier kosten- und platzsparend aus einer hochintegrierten Schaltung (IC) entnommen, die durch entsprechende Beschaltung die gewünschte Funktion ausführt. Dadurch ist die Realisierung auf einer nur wenige Quadrat-zentimeter großen Leiterplatte möglich, die auch in SMD-Technik ausgeführt werden kann, da die Regelung nur eine geringe Leistungsaufnahme besitzt.

Da die Temperaturschwankung der beschriebenen Anordnung für bestimmte Anwendungen zu groß ist (z.B. bei Lötgeräten für die SMD-Technik mit Leiter-bahnbreiten von 0,xmm), kann mit höherem Aufwand, unter Beibehaltung des Meßverfahrens, eine bessere Temperaturstabilität erreicht werden.
Durch Erweiterung der Regelung zur Analog/Digital-Schaltung mit einem Takt-geber zur Ablaufsteuerung wird dies ermöglicht.

### Eine diesbezüglich erweiterte Anordnung wird in Abbildung 2 gezeigt:

Die Wechselspannung wird mittels Gleichrichtung (1) zu einer pulsierenden Gleichspannung, die in der Spannungsstabilisierung (2) geglättet und stabilisiert wird. Der Taktgeber (3) sorgt für eine zeitliche Aufteilung von Meßphase und Heizphase. In der Meßphase wird das Heizen unterbrochen und der Widerstand des Heizelementes (8) mit der Sollwert-Vorgabe (4) im Vergleicher (5) verglichen. Je nachdem, ob der Widerstand des Heizelementes über oder unter dem des Sollwertes liegt, wird nun die Ansteuerung (6) für den Wechselspannungsschalter (7) mitgeteilt, ob geheizt oder nicht geheizt werden muß, um den Sollwert zu erreichen. Das Heizen wird dann während der Heizphase durchgeführt bis die nächste Meßphase wieder stattfindet. Die Taktfrequenz wird dabei entsprechend hoch gewählt, um eine möglichst hohe Temperaturstabilität zu erreichen.
Dieses Verfahren kann auch mittels Computer ausgeführt werden.

## Patentansprüche

1. Dadurch gekennzeichnet, daß das Heizelement als Temperatursensor dient, ohne zusätzlich einen Temperaturfühler, einen Meßwiderstand oder desgleichen zu benötigen. Das Heizelement dient unmittelbar zum Messen und Regeln der eigenen Temperatur.

2. Dadurch gekennzeichnet, daß die Dimensionierung des Heizelementes beliebig sein kann.

3. Dadurch gekennzeichnet, daß die Temperatur des Heizelementes ohne die Verwendung eines Temperatursensors erfaßt werden kann.

4. Dadurch gekennzeichnet, daß kein separater Meßwiderstand im Heizstromkreis eines Heizelementes zur Erfassung des Heizstromes erforderlich ist.

5. Dadurch gekennzeichnet, daß der Widerstand des Heizelementes mit einem Widerstands-Sollwert verglichen wird.

6. Dadurch gekennzeichnet, daß der Widerstand des Heizelementes und somit die Temperatur des Heizelementes mittels Regelung auf konstantem Wert gehalten werden kann.

7. Dadurch gekennzeichnet, daß ein Taktgeber feste Zeiten für eine Meßphase und eine Heizphase vorgibt. Während der Meßphase findet kein Heizen statt. Während der Meßphase fließt ein geringer Meßstrom durch das Heizelement. Während der Meßphase wird der ohmsche Widerstand des Heizelementes gemessen. Es findet eine periodische Abfrage des Widerstandes am Heizelement statt.

8. Dadurch gekennzeichnet, daß der Regelverlauf ein linearer ist.

9. Dadurch gekennzeichnet, daß die Regelung auch mittels Computer erfolgen kann.
